Europäisches Patentamt

European Patent Office

Office européen des brevets

(19)

(11) Publication number: **0 030 134**
**B1**

(12) **EUROPEAN PATENT SPECIFICATION**

(45) Date of publication of patent specification: **29.05.85**

(51) Int. Cl.⁴: **B 66 B 1/34,** G 01 G 3/12

(21) Application number: **80304271.2**

(22) Date of filing: **27.11.80**

(54) **Elevator cab load measuring system.**

(30) Priority: **28.11.79 US 98004**
**28.11.79 US 98003**

(43) Date of publication of application:
**10.06.81 Bulletin 81/23**

(45) Publication of the grant of the patent:
**29.05.85 Bulletin 85/22**

(84) Designated Contracting States:
**CH DE FR LI NL SE**

(56) References cited:
**GB-A- 467 348**
**GB-A- 739 966**
**GB-A-1 083 260**
**US-A-2 439 608**
**US-A-2 793 264**
**US-A-3 332 517**
**US-A-3 512 595**

(73) Proprietor: **OTIS ELEVATOR COMPANY**
**One Financial Plaza**
**Hartford, CT 06101 (US)**

(72) Inventor: **Donofrio, Andrew J.**
**53 Meadow Street**
**Newington Connecticut 06111 (US)**
Inventor: **Games, John E.**
**24 Zimmer Road**
**Granby Connecticut 06035 (US)**

(74) Representative: **Tomlinson, Kerry John et al**
**Frank B. Dehn & Co. European Patent Attorneys**
**Imperial House 15-19 Kingsway**
**London WC2B 6UZ (GB)**

Courier Press, Leamington Spa, England.

## Description

Technical Field

This invention relates to equipment for measuring elevator cab loads.

Background Art

Superior elevator performance is possible by controlling elevator cab movement in relation to actual cab loads. The ride, for instance, can be smoother because unacceptable acceleration and deceleration rates can be avoided by controlling motor torque as a function of actual weight; uneven or jerky car movement is thus prevented. Changes in cab weight at the floors can also provide an indication of car usage and from that cab allocation can be made in a way that provides minimum service request response time. The capability to know the cab weight at any instant in time consequently can be very useful in providing efficient, comfortable elevator service, mainly because operation can be tailored, in a dynamic way, to actual cab conditions. This capability also provides the possibility to conserve energy by tailoring power usage to actual requirements.

Systems that determine elevator cab weight have been in use for some time, and all of them operate on basically the same principle: they measure a displacement resulting from the change in cab weight. The majority of these systems measure the change in the size of shock absorbing springs or pads that support the elevator cab within a surrounding car support structure to which the hoist ropes are connected. As the cab weight within that support structure increases, these support devices are compressed and the extent to which that compression changes with loads manifests the reactive force they exert on the cab to support the load; thus it also indicates the load changes. By correlating the changes that occur when the cab is loaded and empty, the load can be determined — but not with very great precision or repeatability. Other related systems measure the entire displacement, relative to the shaftway, from the stretching that takes place in the hoist ropes as the loads change.

Displacement measuring systems do not necessarily provide accurate, repeatable results and thus precise car motion control is not possible. One factor contributing to those inaccuracies is the inherent hysteresis in the elastomeric material used in the pads that are found in most systems for providing ride cushioning. This hysteresis often is significant and unpredictable and is particularly susceptible to changes in relation to temperature. Because of this, a system which is premised upon measuring the displacement of all the supporting buffers in order to determine the aggregate reactive force cannot be exceedingly precise. The inaccuracies are even worse in systems premised on sensing the change in cable length. One reason is that the length of the cable supporting the cab is not the same at the top and bottom of the shaftway, and as a result, the amount of cable stretch that occurs for a given weight is different at different points in the shaft. Another reason is that the stretch is determined by the entire weight of the car structure, but that weight is significantly greater than the changes in sensed cab loads. Consequently, most of the cable stretch occurs from the entire car weight (frame and cab). These systems therefore have poor resolution as well. An elevator load measuring system is described in GB—A—1083260, and US—A—3512595 describes beam type strain gauges for a weighing platform.

The state of the art manifests a pronounced need for far more precise load sensing-weighing systems.

Disclosure of Invention

According to the invention, there is provided an elevator system wherein the cab is supported on a frame and passenger/duty load is determined by means of a system characterised by, apparatus located between the cab and the frame through which a portion of the overall cab supporting force is transmitted to selected points on the cab, said apparatus including two force transducers which are located on a straight line that passes substantially through the cab center of deflection, at opposite points thereon with respect to the center of deflection, the force transducers generating a signal associated with each point, the magnitude of said signal representing the force transmitted therethrough to the cab, the arrangement being such that the supporting force transmitted through said point is the same for a given weight regardless of the distribution of the weight in the cab, and means for summing said signals and for scaling the sum to determine passenger/duty load.

The invention also includes a calibration method comprising the features of claim 11.

Rather than measuring cab weight indirectly, by first measuring displacement and from that determining the reactive force applied to the cab from an ideal elastomeric pad or spring, a system of the present invention employs a dramatically different approach: the reactive force applied through the pad to the car is directly sensed by means of force transducers which are located between the buffer and the cab support structure. Consequently, owing to the fact that the invention provides for direct weight measurement, transducers do not have to be fixed at each support point, because, at opposite points on a line that passes through the center of deflection, an aggregate force is provided which reflects the total force and the weight. Thus at least one pair of transducers, located diametrically opposite to each other along a line passing through the center of deflection, may be used. The actual load is determined by referencing the reactive force sensed by the transducers to the total number of support points. In addition, a single force transducer may if desired be located at the centre of deflection.

Since the sum of the reactive forces is transmitted through the transducers and is proportional to the actual weight, that weight can be computed by summing the outputs of the transducers and scaling them to the maximum and minimum cab weight to compute the load. Thus, according to a preferred feature, the system comprises processing means for summing said signals; for assigning a cab weight parameter to said sum; for subtracting a first cab weight parameter reflecting the actual empty cab weight from said assigned parameter to produce a weight change parameter; and for multiplying said weight change parameter by a second weight related parameter reflecting the relationship between the change in said sum and actual cab weight to produce a second parameter reflecting the passenger/duty load.

The empty weight of the cab produces a particular sum from the transducers and that sum is stored. From the maximum permissible car weight a coefficient is stored which represents the slope of the straight line connecting the minimum and maximum weight points. Computation of the passenger load is made in accordance with this equation:

(1) LOAD = KA(sum − MIN. SUM) where

(2)    KA = max.    load/(MAX.    SUM − MIN. SUM)

Since the load is computed by reference to the curve associated with the sum of the transducer outputs, the minimum sum and the maximum sum can be estimated, and those estimates may be stored and a correction for each can be provided; that correction being significantly smaller than the estimate, thus avoiding poor resolution where car weights are much greater than the passenger loads that are measured.

A feature of the present invention therefore is that it provides a system whose accuracy and repeatability is unaffected by the characteristics of the elastomeric buffers or springs that are used to support the cab.

Another feature is that a system which uses only two transducers, is considerably less expensive than prior art systems utilizing displacement detection devices at each of the support points.

An embodiment of the invention will now be described by way of example and with reference to the accompanying drawings, in which:

Fig. 1 is an elevational view of a portion of a simplified elevator car structure; in this structure one end of the cab is supported on a frame by a transducer and pad arrangement according to the present invention and the other end is supported by an elastomeric pad and a spacer.

Fig. 2 is a diagram of a simplified equivalent model of an elevator car structure; the cab is resiliently mounted at six points; at two of those points force sensing transducers are disposed between the cab and the structure and a pad is disposed between the transducer and the cab.

Fig. 3 is a block diagram of a system embodying the present invention; this system uses two force transducers which are located as shown by the transducers in Fig. 2.

Fig. 4 is a graph which shows the relationship between reactive force and the combined output voltage for the two transducers that are shown in the exemplary system in Fig. 3.

Fig. 5 is a flow chart that sets forth the routine for deriving load weight from two transducers in Fig. 4 by means of a computer.

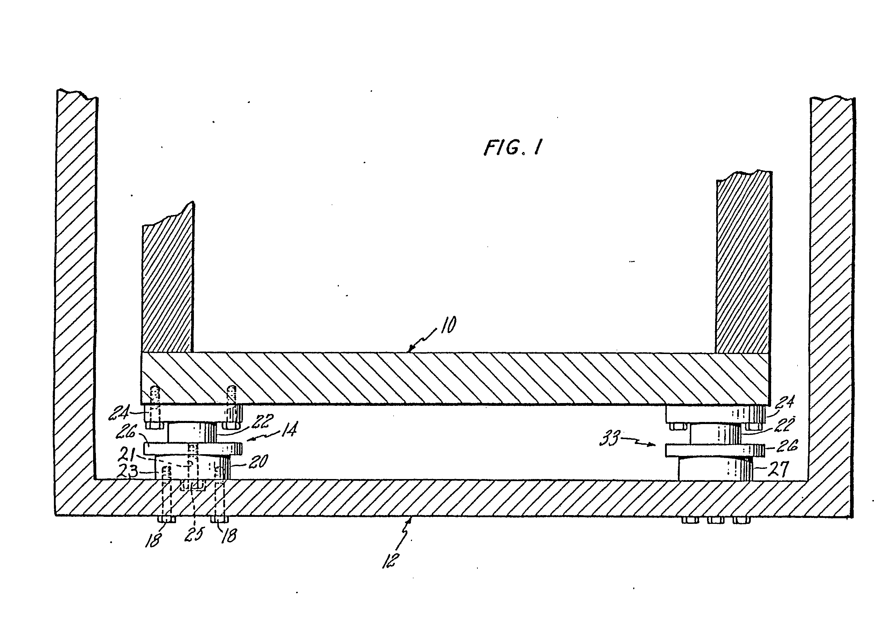

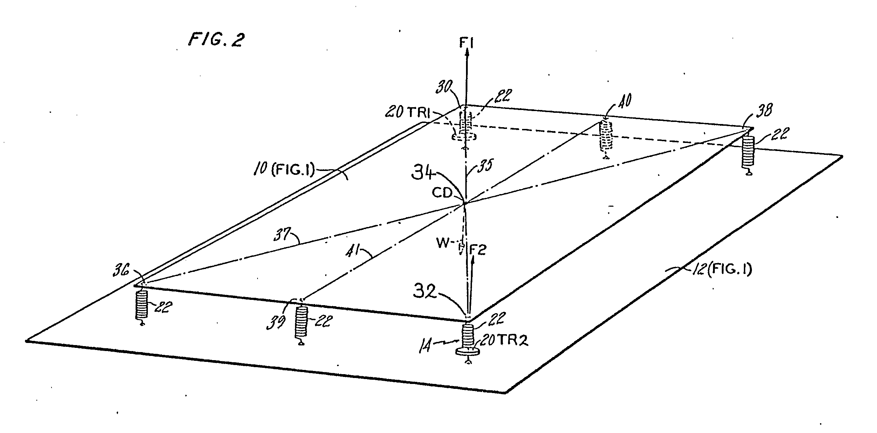

In Fig. 1 the floor 10 of an elevator cab is attached to a frame 12 by means of a support assembly 14. This assembly includes a reactive force transducer 20, which is bolted by means of bolts 18 to the frame 12, and a resilient pad 22. A metal plate 24 is bolted to the cab floor 10, and a bolt 25 passes through the center of the transducer 20 and attaches to a plate 26. The cab is mechanically connected to the frame through the transducer by means of the bolt 25 and to the bolt through the pad. The transducer is of the beam type. These have a beam structure (not shown) extending from the fastening bolts 18 to the transducer center 21, which is essentially movable vertically with the car, whereas the outer portion 23 is fixed to the frame by the bolts 18 and, hence, is not likewise movable. Vertical reactive forces (weight) are applied through the bolt 25 and produce strains on these beams. The beams contain strain elements and a constant voltage is applied to these elements, and they produce a single transducer output voltage that changes proportionally with the strain — the vertical force on the transducer. An example of a suitable transducer of this type is model B—600—018 made by Genesco Corporation. It has a gain of 0.2 mV/volts/1000 lb (454 Kg) for a range from zero to one thousand pounds. Thus if 10 V.D.C. is applied, the output increases linearly from 0 to 2 mV for a 1000 lb (454 Kg) load.

Fig. 2 is a diagram of a simplified mechanical model of an elevator car; the pads 22, for instance, are depicted by their function equivalents — springs. The cab 10 is supported at six points on the frame 12. At two of these points 30, 32 support is provided by the assembly 14. At the other support points 36, 38, 39 and 40 an assembly 33 is used, and as shown in Fig. 1, it consists of the elastomer pad 22 and a spacer 27 which takes up the space of the transducer 20 that it replaces. The points 30, 32 are on a line 35 which passes through the center of deflection 34 of the floor 10. The points 36, 38 are on a line 37 which also passes through the center of deflection 34, and the points 39, 40 are on a line 41 which also passes through the center of deflection. The center of deflection (CD) is simply the point which moves only in the vertical direction, depending upon changes in weight W (empty cab + passengers) applied to the floor, regardless of how the weight is distributed. If the weight is located on the line 35 but not precisely at the center of the cab, i.e. at 34, it can be reflected back to the line 37. From that it creates a moment around each point 36, 38 and reactive force at each point similarly creates a moment around its opposite point. But when the floor is in equilibrium, the total reactive force at the points 36, 38 must equal a portion of the weight reflected on the line, but the magnitude of that portion does not change with the location of the weight, although that changes the tilt around the center of deflection. The sum of the moments around the points also equals zero in the equilibrium condition. Thus the location of the weight on the floor simply determines the ratio between the forces at the two points 36, 38; yet the sum remains the same — for a given weight. This analysis assumes a simple beam extending between the points 36, 38 but it is equally applicable to a multi-supported system, i.e. the model in Fig. 2. There by using the same procedure, reflecting the weight to the line of action between the support points, the force at any two points on opposite sides of the center of deflection on the same line passing therethrough is a portion of the overall weight of the car and does not vary with the location of the weight. The effect of this is simply that if the pads all have substantially the same force coefficient, even though the floor tilts as the weight is moved around, the sum of the reactive forces at points 30, 32, for example, always provides the same portion of the overall weight. The center of deflection therefore is simply the point at which there is no tilting movement from the moments and only resultant vertical displacement from the weight that effectively appears there. For another, simpler way, as weight is added to the floor, the sum of the reactive forces (e.g. F1, F2) at any two points substantially on a line passing through the center of deflection increases — and no matter where the weight is applied, that sum is the same, even though the change it (weight location) causes in F1 and F2 may be different, depending upon the weight distribution. Thus $F1 + F2 = M \cdot \text{weight}/N$ (M = number of transducers and N = number of support points), assuming that the spring rates for the pads are the same. Thus, by summing the outputs from the transducers TR1 and TR2 the force can be determined simply by multiplying the force, which that sum represents, by three. Similarly, if four transducers (one at each corner) are summed together, their outputs represent an aggregate force which is two-thirds of the total reactive force.

Obviously, if a transducer and pad were to be located at the center of deflection, the reactive force at that point would be one-seventh of the total weight; again because there is no torque at the center of deflection. Therefore, by using force transducers to detect actual reactive forces it is possible to use one transducer at the center of deflection (seven support points) or two transducers TR1, TR2, e.g. at points 20, 32 on a line through the centre of deflection, or more, according to the same principles.

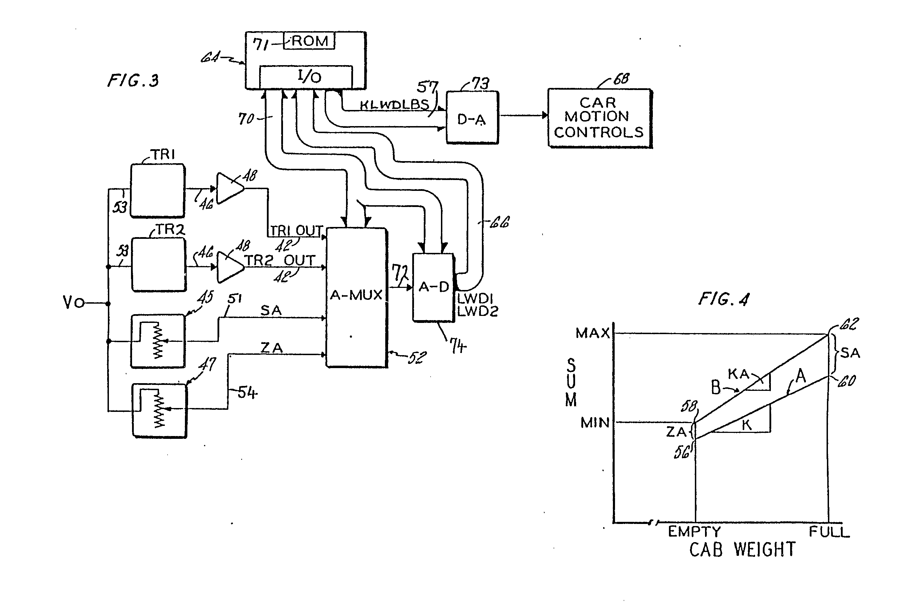

Fig. 3 is a block diagram of a system for determining load or passenger weight through the use of the two transducers TR1 and TR2 in the model shown in Fig. 2. Each of these transducers has an associated output line 46 which is connected to a buffer amplifier 48 having an output line 42 which connects to an analog multiplexer (A-MUX) 52. Each transducer is powered from a constant DC voltage V which is supplied to an input 53 on each transducer. From this voltage each transducer produces an output voltage on its output line 46 and this output voltage is proportional to the reactive force which is applied through the transducer.

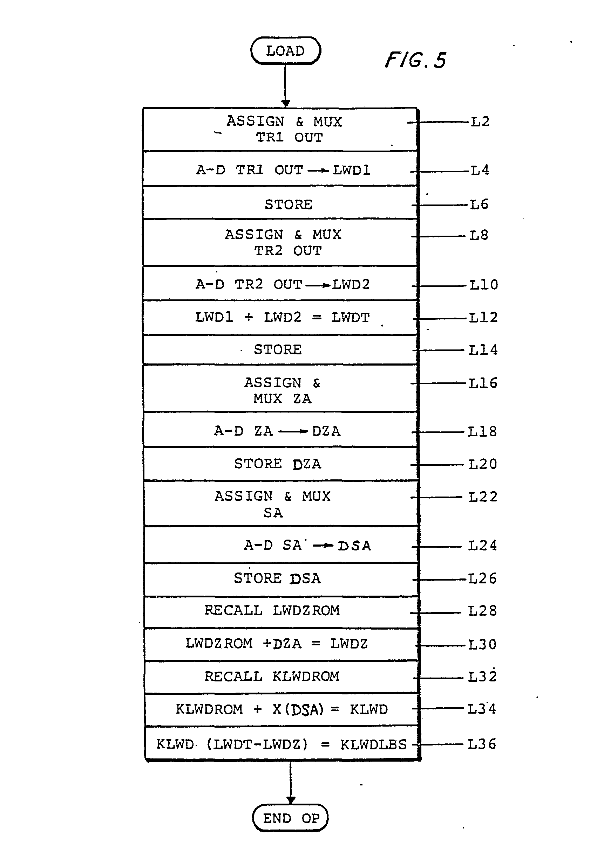

Fig. 4 is a graph which shows the relationship between the combined outputs (sum) from the two transducers TR1 and TR2 with respect to the total reactive force they supply to the car at their associated support points. Line A is based on the estimated outputs from these transducers when the car is empty and fully loaded. Line B, however, represents the actual relationship and is derived from a computation using the equation defining the line A and modifying the slope and the minimum weight point based upon the difference between the estimated and actual car loads when the car is empty and full. This computational process is developed in greater detail later in this description.

From the DC voltage V a circuit 45 provides a preadjustable DC reference voltage (span adjust) on its output line 51 to the multiplexer 52. A circuit 47 similarly provides a preadjustable reference voltage (zero adjust) on an output line 54 which goes to the multiplexer. Each of these circuits may be simply a potentiometer. The zero adjust (ZA) is the difference between an estimated minimum sum (min sum) 56 (in Fig. 4) and the actual minimum sum 58 for the empty car; likewise the span adjust (SA) is the difference between an estimated maximum sum (max sum) 60 and the actual maximum sum 62 when the car is fully loaded. The estimated minimum sum 56 is stored in a ROM 71 which is part of a microcomputer 64 that is employed to carry out certain computational routines to determine load weight from the transducers TR1 and TR2 based upon the straight line equation defining the relationship between load weight and the transducer outputs. Also stored in the ROM is the slope (K) of the line A between the estimated points.

In the system in Fig. 3 once the passenger load is determined it is supplied to a D—A converter 73 over a line 57 from the computer. The D—A converter produces an analog signal which may be supplied to a variety of possible car motion controls 68; these are generically depicted because they form no part of the invention. Nevertheless, these controls may control elevator car motion, provide utilization monitoring or both.

The flow chart which comprises Fig. 5 depicts a routine for selecting the analog transducer outputs, the analog span adjust (SA) and the zero adjust (ZA) and converting these analog signals into digital form and from that computing the load from a line equation defining the line B. (This equation is:

$$(3) \; (K + X(SA))(\text{sum} - \text{min sum} - ZA)$$

where X scales the span adjust (SA) to the line slope KA. Alternatively, the span adjust and zero adjust can be used to define the beginning and end points of the line B and from that the slope, but there is an advantage in the former approach in that better resolution is provided because the change in the transducer outputs caused by passenger loads is much smaller than the actual output caused by the empty weight of the cab.

The computer retrieves the analog information (TR1, OUT, TR2 OUT, SA, ZA) from the transducers and the span adjust and zero adjust circuits by the transmission of command signals to the A—MUX unit 52 over a line 70 from the computer in order to select a particular multiplexer input which is then supplied over a line 72 to the input of an A—D converter 74. This converter, on a command over the line 70 from the computer, converts the analog information into digital form and supplies this digital information over a line 66 to the computer 64. This A—D converter simply may be a counter whose output count is proportional to the analog signal that is supplied to its input from the multiplexer.

The flow chart in Fig. 5 illustrates the sequential steps which are performed in a load computation routine LOAD by the computer, using the analog information from the transducers and the span and zero adjust circuits together with the stored slope (KLWDROM) and the stored minimum car weight sum (LWDZROM). In this routine the multiplexer input containing TR1 OUT is selected L2 which causes TR1 OUT to appear on the multiplexer output line that goes to the A—D converter. TR1 OUT is then converted L4 into a digital equivalent (LWD1) reflecting the transducer reactive force. LWD1 is then stored L6 in the computer memory. TR2 OUT is then selected L8 and converted L10 into its digital equivalent (LWD2). LWD1 and LWD2 are summed L12 and the sum (LWDT) is stored L14 in the computer memory. The zero adjust (ZA) is selected L16 and converted L18 to its digital force equivalent (DZA) which is then stored L20 in the computer memory. Similarly, the span adjust (SA) is selected L22 and then converted L24 to its digital equivalent (DSA) which is then stored L26 in the computer memory. The stored estimated minimum empty car weight sum (LWDZROM) is recalled L28 and summed L30 with DZA to yield the corrected minimum load weight sum (LWDZ). The stored estimated slope (KLWDROM) is recalled L32 and summed L34 with a correction (X) (DSA) to yield the corrected slope KLWD. (As previously stated, X is a stored coefficient for properly scaling DSA to the slope.) The corrected minimum load weight sum (LWDZ) is subtracted from the actual load weight sum (LWDT) and the remainder is multiplied by the corrected slope KLWD to yield the load (KLWDLBS).

A similar procedure obviously may be utilized with more than two transducers, for instance four, and in that case the difference in the routine would principally be the inclusion of additional steps for retrieving the outputs from the transducers and providing for their conversion into a digital format and then summing them with the outputs from the transducers TR1 and TR2. Obviously, the span adjust and zero adjust would have to be different because the overall sum of these transducers would be greater reflecting the greater aggregate reactive force that is being sensed. The previously described routine provides the most accurate way to compute the load from the analog outputs provided by the transducers because the ratio between the passenger loads and total car load are actually small in most applications; this particular routine avoids resolution problems. Further, while the computer has been shown and discussed for performing these computations, they no doubt can also be done in a totally analog circuit or one consisting of discrete logic circuits. Still a computer based approach is preferred because it can be done as a routine in a computer that is used to control many other elevator motion functions.

**Claims**

1. An elevator system wherein the cab is supported on a frame and passenger/duty load is determined by means of a system characterised by apparatus located between the cab and the frame through which a portion of the overall cab supporting force is transmitted to selected points on the cab, said apparatus including two force transducers which are located on a straight line that passes substantially through the cab center of deflection, at opposite points thereon with respect to the center of deflection, the force transducers generating a signal associated with each point, the magnitude of said signal representing the force transmitted therethrough to the cab, the arrangement being such that the supporting force transmitted through said points is the same for a given weight regardless of the distribution of the weight in the cab, and means for summing said signals and for scaling the sum to determine passenger/duty load.

2. An elevator system according to claim 1, wherein said apparatus further comprises a force transducer which is located substantially at the cab center of deflection.

3. An elevator system according to claim 1 or 2 wherein the cab is resiliently supported at a plurality of support points including the points to which force is transmitted through said apparatus to the cab.

4. An elevator system as claimed in any preceding claim comprising processing means for summing said signals; for assigning a cab weight parameter to said sum; for subtracting a first cab weight parameter reflecting the actual empty cab weight from said assigned parameter to produce a weight change parameter; and for multiplying said weight change parameter by a second weight related parameter reflecting the relationship between the change in said sum and actual cab weight to produce a second parameter reflecting the passenger/duty load.

5. An elevator system according to claim 4 further comprising: processing means for storing a third predetermined parameter reflecting estimated empty cab weight and a fourth parameter reflecting an estimated relationship between said sum and actual cab weight, and for adding corrections to said stored estimated parameters to generate said first and second cab weight parameters.

6. An elevator system according to claim 5, further comprising: means for adjustably setting and generating said corrections, and processing means for selecting said corrections each time the passenger/duty load is determined.

7. An elevator system according to claim 6, further comprising: a multiplexer for sequentially selecting the or each said signal and said corrections, and processing means for controlling said multiplexer to sequentially select each signal and said corrections prior to the determination of passenger load.

8. An elevator system according to claim 7, wherein, said signals and said corrections are analog signals, and further comprising: an A—D converter, processing means for controlling said A—D converter to convert each said signal and correction to a digital format, for use by said processor, following the selection of each said signal and correction.

9. An elevator system according to any of claims 5 to 8 wherein the correction for said first parameter reflects the difference between actual and estimated empty cab weight and said correction to said second parameter reflects the difference between estimated and actual full, maximum cab weight.

10. An elevator system according to claim 9 wherein said corrections are obtained by adjusting said correction setting means when the cab is empty and fully loaded.

11. For use with a passenger/duty load measuring system wherein passenger/duty load is determined from empty cab weight and full cab weight, a calibration method characterised by storing estimated weight values for the full and empty cab conditions, said estimated weight values being different from actual weight values, adjusting a trimmer circuit to produce a selectable correction parameter representing the difference between the stored empty weight value and the actual empty weight value for the cab, placing a weight in the cab, said weight equalling the maximum passenger load, adjusting a second trimmer circuit to produce a second selectable correction parameter representing the difference between the stored full weight value and the actual weight value obtained with said weight in the cab.

## Patentansprüche

1. Ein Aufzugsystem, bei dem die Kabine von einem Rahmen getragen und die Belastung durch Personen/Lasten über ein System ermittelt wird, das durch eine Vorrichtung, zwischen der Kabine und dem Rahmen angeordnet, gekennzeichnet ist, über die ein Teil der Gesamttragkraft der Kabine auf ausgewählte Punkte an der Kabine übertragen wird, wobei die genannte Vorrichtung zwei Kraftüberträger umfaßt, die auf einer geraden Linie, welche im wesentlichen durch das Deflektionszentrum der Kabine verläuft, an entgegengesetzten Stellen im Verhältnis zum Deflektionszentrum angeordnet sind; die Kraftüberträger ein dem jeweiligen punkt zugeordnetes Signal erzeugen und die Größenordnung dieser Signale der dadurch auf die Kabine übertragenen Kraft entspricht, wobei die Ausführung dergestalt ist, daß die über die genannten Punkte übertragene Tragkraft für ein bestimmtes Gewicht, unabhängig von der Gewichtsverteilung in der Kabine, unverändert bleibt; sowie eine Einrichtung für die Summierung der genannten Signale und die Auswertung der Summe, um die Belastung durch Personen/Lasten ermitteln zu können.

2. Ein Aufzugsystem gemäß Anspruch 1, wobei die genannte Vorrichtung außerdem einen Kraftüberträger umfaßt, der im wesentlichen im Deflektionszentrum der Kabine angeordnet ist.

3. Ein Aufzugsystem gemäß Anspruch 1 oder 2, wobei die Kabine an einer Reihe von Tragpunkten eine flexible Abstützung besitzt, einschließlich der Punkte, auf die die Kraft über die genannte Vorrichtung zur Kabine übertragen wird.

4. Ein Aufzugsystem gemäß irgendeinem der vorstehenden Ansprüche, das Einrichtungen umfaßt für die Summierung der genannten Signale; für die Zuordnung eines Kabinengewichtsparameters zur genannten Summe; für die Subtraktion eines ersten Kabinengewichtsparameters für das tatsächliche Kabinenleergewicht von dem genannten, zugeordneten Parameter zur Erzeugung eines Gewichtsveranderungsparameters; und für die Multiplikation des genannten Gewichtsveränderungsparameters mit einem zweiten, gewichtsbezogenen Parameter für das Verhältnis zwischen der Veranderung der genannten Summe und dem tatsächlichen Kabinengewicht, um so einen zweiten Parameter für die Belastung durch Personen/Lasten zu erzeugen.

5. Ein Aufzugsystem gemäß Anspruch 4, das außerdem umfaßt: Eine Verarbeitungseinrichtung für die Speicherung eines dritten, vorbestimmten Parameters für das geschätzte Kabinenleergewicht und eines vierten Parameters für das geschätzte Verhältnis zwischen der genannten Summe und dem tatsächlichen Kabinengewicht, sowie für die Eingabe von Korrekturen zu den genannten, gespeicherten, geschätzten Parametern, um die genannten, ersten und zweiten Kabinengewichtsparameter zu erzeugen.

6. Ein Aufzugsystem gemäß Anspruch 5, das außerdem umfaßt: Eine Einrichtung für die jeweilige Einstellung und Erzeugung der genannten Korrekturen, sowie eine Verarbeitungseinrichtung, um die genannten Korrekturen jederzeit bei Festlegung der Belastung durch Personen/Lasten auswählen zu können.

7. Ein Aufzugsystem gemäß Anspruch 6, das außerdem umfaßt: Einen Mehrfachschalter für die Folgeauswahl des genannten oder eines jeden genannten Signals und der genannten Korrekturen, sowie eine Verarbeitungseinrichtung für die Steuerung des genannten Mehrfachschalters, um in Folgeauswahl jedes Signal und die genannten Korrekturen vor Bestimmung der Personenlast auswählen zu können.

8. Ein Aufzugsystem gemäß Anspruch 7, wobei die genannten Signale und die genannten Korrekturen Analogsignale sind, das außerdem umfaßt: Einem A/D-Umwandler, eine Verarbeitungseinrichtung für die Steuerung des genannten A/D-Umwandlers, um jesdes genannte Signal und jede genannte Korrektur in Digitalformat für die genannte Verarbeitungseinrichtung nach Auswahl eines jeden Signals und einer jeden Korrektur umwandeln zu können.

9. Ein Aufzugsystem gemäß irgendeinem der Ansprüche 5—8, wobei die Korrektur für den genannten, ersten Parameter die Differenz zwischen dem tatsächlichen und dem geschätzten Kabinenleergewicht darstellt, und die genannte Korrektur am genannten, zweiten Parameter die Differenz zwischen dem geschätzten und dem tatsächlichen, maximalen Kabinenvollgewicht widerspiegelt.

10. Ein Aufzugsystem gemäß Anspruch 9, wobei die genannten Korrekturen dadurch ermittelt werden, daß die genannte Korrektureinstelleinrichtung bei leerer sowie bei voller Kabine eingestellt wird.

11. Eine Kalibriermethode, vorgesehen für ein Meßsystem zur Bestimmung der Belastung durch Personen/Lasten, wobei die Belastung durch Personen/Lasten über das Kabinenleer- und Kabinenvollgewicht ermittelt wird, dadurch gekennzeichnet, daß die geschätzten Gewichtswerte für die volle und leere Kabine gespeichert werden, wobei die genannten, geschätzten Gewichtswerte von den tatsächlichen Gewichtswerten abweichen; ein Trimmerschaltkreis eingestellt wird, um einen auswählbaren Korrekturparameter für die Differenz zwischen dem gespeicherten Leergewichtswert und dem tatsächlichen Leergewichtswert für die Kabine zu erzeugen; ein Gewicht in. die Kabine gelegt wird, wobei das genannte Gewicht der maximalen Belastung durch Personen entspricht; ein zweiter Trimmerschaltkreis eingestellt wird, um einen zweiten, auswählbaren Korrekturparameter für die Differenz zwischen dem gespeicherten Vollgewichtswert und dem tatsächlichen Gewichtswert, mit dem genannten Gewicht in der Kabine ermittelt, zu erzeugen.

**Revendications**

1. Installation d'ascenseur dans laquelle la cabine est supportée sur un châssis et la charge des passagers/ de service est déterminée au moyen d'un système caractérisé par un appareillage placé entre la cabine et le châssis, par l'intermédiaire duquel une fraction de la force de support globale de la cabine est transmise à des points choisis de la cabine, cet appareillage comprenant deux transducteurs dynamométriques qui sont placés sur une ligne droite passant en substance par le centre de flexion de la cabine, en des points opposés de cette ligne par rapport au centre de flexion, les transducteurs dynamométriques produisant un signal associé à chaque point, la valeur des signaux représentant la force transmise à la cabine, l'agencement étant tel que la force de support transmise par les dits points est la même pour un point donné quelle que soit la répartition du poids dans la cabine et un dispositif pour sommer les signaux et pour réduire la somme afin de déterminer la charge de passagers/de service.

2. Installation d'ascenseur suivant la revendication 1, dans laquelle l'appareillage comprend, en outre, un transducteur dynamométrique qui est placé en substance au centre de flexion de la cabine.

3. Installation d'ascenseur suivant la revendication 1 ou 2, dans laquelle la cabine est supportée élastiquement en plusieurs points de support comprenant les points auxquels une force est transmise par l'intermédiaire de l'appareillage à la cabine.

4. Installation d'ascenseur suivant l'une quelconque des revendications précédentes, comprenant un dispositif de traitement pour sommer les signaux, pour attribuer un paramètre de poids de cabine à la somme, pour soustraire un premier paramètre de poids de cabine reflétant le poids réel de la cabine vide du paramètre attribué afin de produire un paramètre de modification de poids et pour multiplier le paramètre de modification de poids par un second paramètre ayant trait au poids qui reflète la relation entre la variation de la somme et du poids réel de la cabine en vue de produire un second paramètre reflétant la charge de passagers/de service.

5. Installation d'ascenseur suivant la revendication 4, comprenant en outre:
un dispositif de traitement pour stocker un troisième paramètre prédéterminé reflétant le poids estimé de la cabine vide et un quatrième paramètre reflétant une relation estimée entre la somme et le poids réel de cabine et pour ajouter des corrections aux paramètres estimés et stockés en vue de produire le premier et le second paramètre de poids de cabine.

6. Installation d'ascenseur suivant la revendication 5, comprenant en outre:
un dispositif pour ajuster de façon réglable et pour produire les corrections et un dispositif de traitement pour sélectionner les corrections chaque fois que la charge de passagers/de service est déterminée.

7. Installation d'ascenseur suivant la revendication 6, comprenant en outre:
un multiplexeur pour sélectionner de manière séquentielle le signal ou chacun d'eux ainsi que les corrections et un dispositif de traitement pour commander le multiplexeur afin de sélectionner de manière. séquentielle chaque signal et les corrections avant la détermination de la charge de passagers.

8. Installation d'ascenseur suivant la revendication 7, dans laquelle les signaux et les corrections sont des signaux analogiques et qui comprend en outre:

un convertisseur analogique-numérique, un dispositif de traitement pour commander le convertisseur analogique-numérique afin de convertir chaque signal et chaque correction en un format numérique à utiliser par le processeur, après la sélection de chaque signal et sa correction.

9. Installation d'ascenseur suivant l'une quelconque des revendications 5 à 8, dans laquelle la correction pour le premier paramètre reflète la différence entre le poids réel de la cabine vide et le poids estimé de la cabine vide et la correction du second paramètre reflète la différence entre le poids maximum estimé de la cabine remplie et le poids maximum réel de cette cabine remplie.

10. Installation d'ascenseur suivant la revendication 9, dans laquelle les corrections sont obtenues par ajustement du dispositif de réglage de correction lorsque la cabine est vide et lorsqu'elle est complètement chargée.

11. Procédé d'étalonnage à utiliser avec un système de mesure de la charge de passagers/de service dans lequel la charge de passagers/de service est déterminée à partir du poids de la cabine vide et du poids de la cabine remplie, caractérisé en ce qu'on stocke des valeurs de poids estimées pour la cabine chargée et pour la cabine vide, les valeurs de poids estimées étant différentes des valeurs de poids réelles, on règle un circuit d'ajustement pour produire un paramètre de correction pouvant être sélectionné qui représente la différence entre la valeur de poids stockée de la cabine vide et la valeur de poids réelle de la cabine vide, on place un poids dans la cabine, ce poids étant égal à la charge maximum de passagers, on ajuste un second circuit de réglage pour produire un second paramètre de correction pouvant être sélectionné qui représente la différence entre la valeur stockée du poids de la cabine chargée et la valeur réelle obtenue avec le poids dans la cabine.

FIG. 1

FIG. 2

FIG.3

FIG.4

FIG. 5

```
        ( LOAD )
            │
            ▼
┌───────────────────────────┐
│   ASSIGN & MUX            │──── L2
│     TR1 OUT               │
├───────────────────────────┤
│  A-D TR1 OUT ──→ LWD1     │──── L4
├───────────────────────────┤
│        STORE              │──── L6
├───────────────────────────┤
│   ASSIGN & MUX            │──── L8
│     TR2 OUT               │
├───────────────────────────┤
│  A-D TR2 OUT ──→ LWD2     │──── L10
├───────────────────────────┤
│  LWD1 + LWD2 = LWDT       │──── L12
├───────────────────────────┤
│        STORE              │──── L14
├───────────────────────────┤
│     ASSIGN &              │──── L16
│       MUX ZA              │
├───────────────────────────┤
│   A-D ZA ──→ DZA          │──── L18
├───────────────────────────┤
│     STORE DZA             │──── L20
├───────────────────────────┤
│   ASSIGN & MUX            │──── L22
│        SA                 │
├───────────────────────────┤
│   A-D SA ──→ DSA          │──── L24
├───────────────────────────┤
│    STORE DSA              │──── L26
├───────────────────────────┤
│   RECALL LWDZROM          │──── L28
├───────────────────────────┤
│  LWDZROM +DZA = LWDZ      │──── L30
├───────────────────────────┤
│   RECALL KLWDROM          │──── L32
├───────────────────────────┤
│  KLWDROM + X(DSA) = KLWD  │──── L34
├───────────────────────────┤
│ KLWD (LWDT-LWDZ) = KLWDLBS│──── L36
└───────────────────────────┘
            │
            ▼
        ( END OP )
```

4